# DEMANDE DE BREVET EUROPEEN

(11) **EP 2 033 861 A1**
(43) Date de publication de la demande: **11.03.2009**
(21) Numéro de dépôt: 07360039.7
(22) Date de dépôt: 10.09.2007
(51) Int. Cl.: B60S 3/04, B60S 3/06, A46B 17/06

(54) **Dispositif de nettoyage des brosses d'un portique de lavage du véhicule**

(71) Demandeur: Financière Clairac, 75116 Paris (FR)
(72) Inventeur: Villard, Julien, 67240 Oberhoffen-Sur-Moder (FR); Stackler, Christian, 67450 Mundolsheim (FR)
(74) Mandataire: Littolff, Denis

(57) **Abrégé**

Dispositif de nettoyage des brosses (2,3,4) d'un portique de lavage (1) de véhicules, comportant des buses (5,8) projetant un fluide sous pression sur les brosses du portique de lavage.
Il peut comporter des moyens d'orientation des buses relativement aux brosses.

## Description

La présente invention a trait à titre principal à un dispositif de nettoyage des brosses d'un portique de lavage de véhicules. Elle concerne cependant également un procédé de nettoyage mis en oeuvre sur la base de ce dispositif.

Contrairement au nettoyage à haute pression à l'aide de buses ou de lances de lavage pulvérisant un jet de liquide à distance sur les carrosseries de véhicules, les portiques à brosses (par exemple à rouleaux rotatifs) agissent par frottement impliquant un contact mécanique dont l'un des inconvénients bien connus est la génération à terme de rayures ou d'une perte de brillance sur la carrosserie.

Ainsi, il survient avec le temps une forme d'érosion liée au contact répétitif qui se produit pendant l'action de la brosse, et qui affecte l'ensemble de la carrosserie. Par ailleurs, pendant la phase d'interaction entre la ou les brosses et la carrosserie, des rayures peuvent être localement provoquées par l'existence de salissures abrasives présentes sur la carrosserie, momentanément entraînées par une brosse. Enfin, de telles rayures peuvent également être provoquées par des salissures présentes non pas sur la carrosserie mais sur une brosse, soit dès avant le début de l'opération de frottement, soit prélevées ailleurs sur la carrosserie.

Cette dernière hypothèse est malheureusement loin d'être improbable dans la mesure où les rouleaux / brosses, sollicités de manière répétitive pour procéder au lavage de véhicules, se chargent tout à fait normalement de salissures / particules au cours du lavage d'un véhicule, et peuvent dès lors provoquer des dégâts sur la carrosserie de véhicules utilisant ultérieurement le même dispositif de lavage.

L'invention vise à supprimer ce problème, en éliminant toute salissure susceptible d'affecter les rouleaux ou brosses avant le début du lavage d'un véhicule. Dans cette perspective, il est possible de réaliser un nettoyage des brosses au tout début de la phase de lavage programmée par le client ou en fin de lavage de la voiture précédente, par exemple juste avant l'essorage des brosses. Alternativement, cela peut être réalisé en fin d'une phase de lavage, avant ou au cours de la phase de séchage du programme de lavage du véhicule précédent.

En tout état de cause, le dispositif de nettoyage de l'invention se caractérise à titre principal en ce qu'il comporte des buses projetant un fluide sous pression sur les brosses du portique de lavage.

En d'autres termes, outre l'existence possible de buses pour le nettoyage à haute pression de véhicules, qui peuvent coexister avec des brosses opérant par contact mécanique direct avec la carrosserie du véhicule, l'invention met en oeuvre un fluide sous pression non pas destiné au lavage du véhicule, mais au portique de lavage, et plus particulièrement aux brosses qui l'équipent.

Selon une configuration possible, le dispositif de l'invention comporte des moyens d'orientation des buses relativement aux brosses du portique de lavage.

Les moyens d'orientation permettent dès lors un réglage en vue de faire varier la position relative des buses et des brosses. Le but est d'orienter, avant le nettoyage des brosses, les buses dans une direction prédéterminée favorable à un nettoyage correct de celles-ci, par exemple en les orientant tangentiellement aux rouleaux rotatifs, et/ou de permettre une variation de leur orientation au cours du nettoyage des brosses.

Selon une possibilité, les buses sont montées sur le portique de lavage de véhicules.

Dans cette hypothèse, dans le cas de systèmes mixtes, c'est-à-dire de portiques intégrant à la fois des rouleaux et des buses à haute pression pour le lavage des véhicules, le nettoyage des brosses peut éventuellement être réalisé par les mêmes buses. Les deux fonctions dévolues aux buses sont alors mises en oeuvre séquentiellement.

Selon une variante, les buses peuvent être montées sur un portique distinct du portique de lavage de véhicules. Dans cette hypothèse, le système de l'invention est donc monté sur un portique spécifique, prévu pour interagir avec le portique de lavage des véhicules par exemple lorsque celui-ci est stationné à l'arrêt entre deux phases de lavage.

Plus précisément, quelle que soit l'hypothèse envisagée, les buses sont intégrées à au moins une rampe, laquelle peut également être prévue orientable.

Dans ce cas, outre l'orientabilité propre à chaque buse, il est possible de procéder à un préréglage en disposant la ou les rampes de manière adéquate par rapport aux brosses et/ou aux rouleaux. Les deux réglages d'orientation, respectivement des rampes et des buses, optimisent l'opération de nettoyage des brosses.

Selon une configuration possible, le dispositif de l'invention peut en outre comporter des moyens de cartérisation des brosses en cours de nettoyage.

Une telle possibilité vise à protéger les alentours de toute projection. Le carter mis en oeuvre peut par exemple prendre la forme de demi-cylindres dont l'un coulisse sur l'autre afin d'enfermer la ou les brosses pendant leur nettoyage, le carter pouvant se rétracter pendant le lavage du véhicule.

Jusqu'alors, il a été fait état d'un dispositif de nettoyage projetant un fluide sous pression. Ainsi, selon une possibilité, ce fluide peut être de l'air sous pression. Alternativement, il peut s'agir d'un liquide, comportant ou non des moyens chimiques de nettoyage des brosses. En d'autres termes, les salissures susceptibles de rayer les carrosseries des véhicules peuvent être séparées des brosses mécaniquement, sous l'effet de la pression du liquide, voire d'éventuelles forces centrifuges dans le cas de rouleaux rotatifs, et / ou chimiquement par action d'un produit adapté contenu dans le liquide projeté, par exemple du type détergent.

Le liquide projeté peut, selon une possibilité, être chaud. Cette possibilité conduit à supprimer tout risque de projection de particules gelées lors de lavages opérés à une température proche de 0°. Des particules gelées pourraient alors conduire aux mêmes inconvénients que les salissures sur les carrosseries.

Comme mentionné auparavant, l'invention concerne également un procédé de nettoyage basé sur un dispositif tel que décrit ci-dessus. A titre essentiel, ce procédé se caractérise donc en ce qu'il consiste à pulvériser un fluide sous pression sur les brosses pour les nettoyer.

Le nettoyage des brosses mis en oeuvre selon le procédé de l'invention dépend bien entendu de la configuration du portique et des brosses qui y sont incluses. Dans l'hypothèse où il s'agit de rouleaux rotatifs, celles-ci sont de préférence mises en rotation pour leur nettoyage. Ce mouvement conduit à optimiser l'opération, en suscitant la mise en oeuvre de forces qui s'additionnent à la pression du fluide.

Selon une possibilité, le fluide peut être pulvérisé sur les brosses pendant un cycle de 2 à 100 tours desdites brosses. Ce cycle de rotation est alors réalisé de préférence entre deux lavages de véhicules.

La pulvérisation de liquide, dans le cadre du procédé, peut se faire selon une orientation qui est variable, c'est-à-dire que, au cours du nettoyage, l'orientation du ou des jets de nettoyage peut être modifiée pour optimiser l'efficacité dudit nettoyage.

L'invention va à présent être décrite plus en détail, en référence aux figures disposées en annexe, pour lesquelles :
- la figure 1 représente, en vue perspective, une possibilité de dispositif de nettoyage selon l'invention ; et
- la figure 2 montre, également en vue perspective, une alternative de mise en oeuvre du dispositif de l'invention.

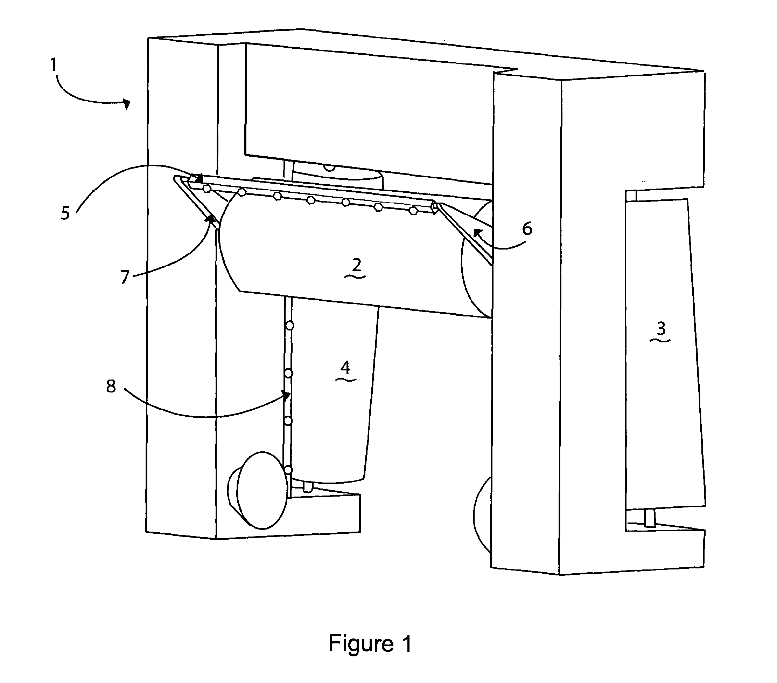

En référence à la figure 1, le portique (1) comporte des brosses en forme de rouleaux rotatifs. Un premier rouleau (2) d'allure horizontale est associé à des rouleaux (3, 4) orientés sensiblement verticalement, l'ensemble étant destiné à nettoyer les surfaces supérieures et les côtés latéraux des véhicules. Ces portiques (1), de manière classique, se déplacent en translation rectiligne relativement au véhicule à nettoyer (non représenté).

Selon l'invention, une première rampe de buses (5) est disposée en regard du rouleau horizontal (2). Cette rampe (5) comporte une succession de buses projetant du fluide à moyenne ou haute pression (jusqu'à 120 bars) à destination de la brosse (2). La rampe (5), montée sur des supports (6, 7) fixés au portique (1), est rotative selon un axe, ce qui permet d'affiner l'orientation des buses par rapport aux rouleaux (2), puisqu'elles peuvent alors être orientées tangentiellement, radialement, ou encore selon une position intermédiaire. Leur orientation peut également varier au cours de la phase de nettoyage du rouleau (2).

Des rampes équivalentes sont prévues pour le nettoyage des rouleaux d'allure verticale (3, 4). Seule la rampe (8) s'appliquant au rouleau (4) est en fait visible sur la figure 1. Elle est rotative selon un axe d'allure verticale, de manière à pouvoir orienter les buses qu'elle contient relativement au rouleau de brossage (4) vertical. De la même manière qu'auparavant, cette orientation peut aller d'une direction tangentielle à une direction radiale ou normale en passant par des positions intermédiaires.

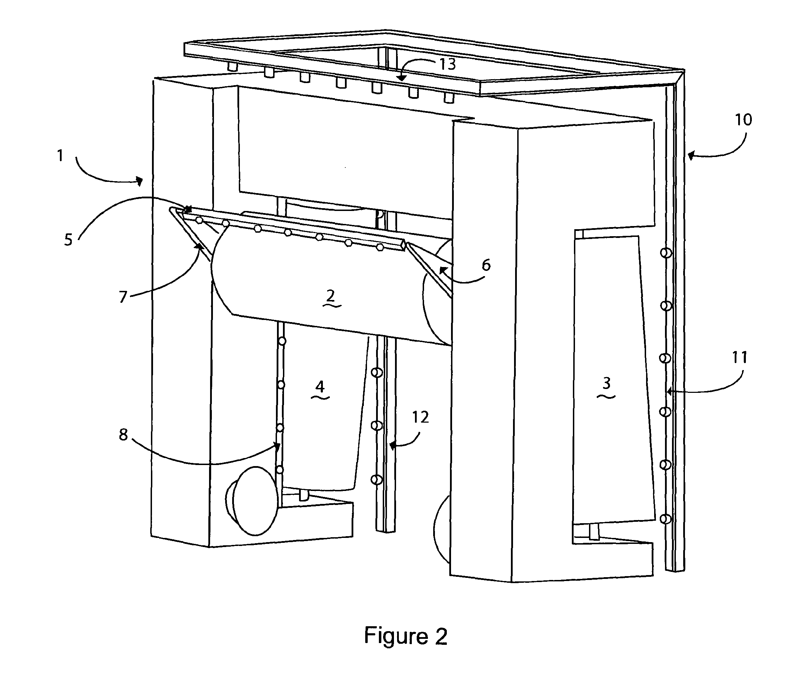

La variante de la figure 2 montre un portique de nettoyage (10) distinct du portique de lavage de véhicules (1), fixe ou mobile, et qui comporte sur ses montants latéraux (11, 12) des buses orientées en regard des rouleaux d'allure verticale (3, 4). Une rampe (13) est par ailleurs disposée en partie supérieure du portique (10), en regard du rouleau supérieur horizontal (2). Il est à noter que, dans l'hypothèse représentée en figure 2, la rampe supérieure (13) vient en complément de la rampe (5) telle que déjà représentée dans la configuration de la figure 1.

Dans cette variante de la figure 2, les rampes de buses représentées ont pour fonction exclusive le nettoyage des rouleaux (2, 3, 4). Dans l'hypothèse de la figure 1, les rampes latérales (8) peuvent également être mises en oeuvre pour le lavage à haute pression du véhicule.

Comme déjà mentionné, le lavage des rouleaux (2, 3, 4) peut intervenir soit entre deux opérations de lavage successives de véhicules, soit pendant des phases intermédiaires, avant ou après le lavage proprement dit (pendant le séchage, etc.).

Les exemples représentés en figures 1 et 2 ne sont bien entendu pas exhaustifs de l'invention. Celle-ci englobe d'autres variantes, par exemple de forme, de configuration ou de positionnement des portiques, rampes de buses, etc.

## Revendications

1. Dispositif de nettoyage des brosses d'un portique de lavage de véhicules, **caractérisé en ce qu'**il comporte des buses projetant un fluide sous pression sur les brosses du portique de lavage.

2. Dispositif de nettoyage selon la revendication précédente, **caractérisé en ce qu'**il comporte des moyens d'orientation des buses relativement aux brosses.

3. Dispositif de nettoyage selon la revendication précédente, **caractérisé en ce que** les moyens d'orientation sont réglables en vue de faire varier la position relative des buses et des brosses.

4. Dispositif de nettoyage selon l'une des revendications précédentes, **caractérisé en ce que** les buses sont montées sur le portique de lavage de véhicules.

5. Dispositif de nettoyage selon l'une des revendications 1 à 3, **caractérisé en ce que** les buses sont montées sur un portique distinct du portique de lavage de véhicules.

6. Dispositif de nettoyage selon l'une quelconque des revendications précédentes, **caractérisé en ce que** les buses sont intégrées à au moins une rampe.

7. Dispositif de nettoyage selon la revendication précédente, **caractérisé en ce que** la ou les rampes sont orientables.

8. Dispositif de nettoyage selon l'une quelconque des revendications précédentes, **caractérisé en ce qu'**il comporte des moyens de carterisation des brosses en cours de nettoyage.

9. Dispositif de nettoyage selon l'une quelconque des revendications précédentes, **caractérisé en ce que** le fluide projeté par les buses est un liquide.

10. Dispositif de nettoyage selon la revendication précédente, **caractérisé en ce que** ledit liquide comporte des moyens chimiques de nettoyage des brosses.

11. Dispositif de nettoyage selon l'une des revendications 9 et 10, **caractérisé en ce que** le liquide projeté est chaud.

12. Dispositif de nettoyage selon l'une quelconque des revendications 1 à 8, **caractérisé en ce que** le fluide est de l'air.

13. Procédé de nettoyage des brosses d'un portique de lavage de véhicules à l'aide d'un dispositif selon les revendications précédentes, **caractérisé en ce qu'**il consiste à pulvériser un fluide sous pression sur lesdites brosses.

14. Procédé de nettoyage selon la revendication précédente, **caractérisé en ce que** les brosses, lorsqu'elles sont en forme de rouleaux rotatifs, sont mises en rotation pour leur nettoyage.

15. Procédé de nettoyage selon la revendication précédente, **caractérisé en ce que** le fluide est pulvérisé sur les brosses pendant un cycle de 2 à 100 tours desdites brosses.

16. Procédé de nettoyage selon l'une quelconque des revendications 13 à 15, **caractérisé en ce que** la pulvérisation est déclenchée entre deux cycles de lavage de véhicule.

17. Procédé de nettoyage selon l'une quelconque des revendications 13 à 16, **caractérisé en ce que** le fluide est pulvérisé sur les brosses selon une orientation variable.
